# EUROPÄISCHE PATENTSCHRIFT

(11) **EP 4 484 626 B1**
(45) Veröffentlichungstag und Bekanntmachung des Hinweises auf die Patenterteilung: **04.11.2026**
(21) Anmeldenummer: 24192928.0
(22) Anmeldetag: 24.09.2021
(51) Int. Cl.: D02G 3/38, D02G 3/44, H01B 1/02, H05K 9/00, D01D 5/08, D01F 9/08

(54) **CO-FILAMENT, ROVING, GARN, HALBZEUG, VERWENDUNG EINES CO-FILA-MENTS UND VERFAHREN ZUR HERSTELLUNG EINES CO-FILAMENTS**
CO-FILAMENT, ROVING, YARN, SEMI-FINISHED PRODUCT, USE OF A CO-FILA-MENT AND METHOD FOR PRODUCING A CO-FILAMENT
CO-FILAMENT, ROVING, FIL, PRODUIT SEMI-FINI, UTILISATION D'UN CO-FILA-MENT ET PROCÉDÉ DE FABRICATION D'UN CO-FILAMENT

(30) Priorität: 25.01.2021 DE 102021101494
(43) Veröffentlichungstag der Anmeldung: 01.01.2025
(62) Dokumentnummer(n) der früheren Anmeldung(en) nach Art. 76 EPÜ: 21782976.1 / 4 281 607
(73) Patentinhaber: FibreCoat GmbH, 52068 Aachen (DE)
(72) Erfinder: Haas, Richard, 52064 Aachen (DE); Brüll, Robert, 52146 Würselen (DE); Lüking, Alexander, 52064 Aachen (DE)
(74) Vertreter: Richly & Ritschel Patentanwälte PartG mbB

(56) Entgegenhaltungen:
- US-A- 4 647 495
- US-A1- 2010 084 179
- US-B1- 6 289 702

## Beschreibung

Die Erfindung betrifft ein Co-Filament, ein Roving, ein Garn, ein Halbzeug, eine Verwendung eines Co-Filaments und ein Verfahren zur Herstellung eines Co-Filaments.

Insbesondere betrifft die Erfindung ein Co-Filament aufweisend ein erstes Filament aus einem anorganischen Stoff und ein zweites Filament aus einem metallischen Stoff.

Filamenten kommen in der Technik eine stetig steigende Bedeutung zu. Dies geht unter anderem mit dem wachsenden Spektrum von Eigenschaften einher, die im Stand der Technik bekannte Filamente aufweisen.

Insbesondere im Bereich der Kraftfahrzeugtechnik, der Luftfahrzeug- und Raumfahrzeugtechnik und der Filtration, insbesondere in Katalysatoren, ist ein Bedarf für hochtemperaturbeständige und kostengünstige Filamente entstanden, welche zusätzlich auch leitfähig für Wärme und/oder elektrischen Strom sind.

Im Bereich der thermisch und/oder elektrisch leitfähigen Filamente zur Leitung von elektrischen Strömen und/oder zur Abschirmung von elektromagnetischen Wellen, zur Leitung von Wärme, zur Bildung von Antennen und Ähnlichem werden verschiedene Produkte aus Filamenten eingesetzt:
Reine Multifilament-Metallfasern sind aufgrund des Herstellungsverfahrens, insbesondere des Strangziehverfahrens, mit 100 - 800 €/kg teuer in der Herstellung, insbesondere sofern der Filamentdurchmesser kleiner als 50 Mikrometer ist.

Galvanisch mit Silber oder Aluminium beschichtete Polymerfasern sind aufgrund des zweistufigen und langsamen Herstellungsprozesses mit 200 - 500 €/kg ebenfalls für viele Anwendungen nicht relevant. Zudem ist die Dauereinsatztemperatur aufgrund des eingesetzten Polymers, insbesondere 80 °C für PA6, nicht ausreichend für Anwendungen im Bereich von Motoren.

Carbonfasern sind mit 10 - 100 €/kg für viele Anwendungen preislich interessant, aber die Leitfähigkeit ist insbesondere für die elektromagnetische Abschirmung nicht ausreichend.

Für manche Anwendungen, z.B. im Bereich der elektromagnetischen Abschirmung, werden auch Textilien flächig, nachträglich galvanisch mit Silber, Kupfer oder Aluminium beschichtet. Diese Schicht kann beim Drapieren Risse bilden, welche wiederum als Antennen fungieren und eine Schirmung verhindern, gleiches gilt für Folien. Folien, Bleche und Platten bieten weder ausreichende Drapier- und Formbarkeit für Bauteile oder Räume noch die Möglichkeit für Luft diese Schicht zu durchdringen, was insbesondere die Kühlung von Geräten oder Räumen erschwert.

US 2010/084179 A1 offenbart ein Hybridgarn mit einer ähnlichen Struktur wie Co-Filamente der vorliegenden Erfindung. Das Hybridgarn besteht aus einem Basaltfilament als Kernstruktur, das von einem Metalfilament umgeben ist.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Co-Filament aufweisend ein erstes Filament und ein zweites Filament, wobei das erste Filament und das zweite Filament physikalisch und/oder chemisch miteinander verbunden sind,
wobei das erste Filament aus einem anorganischen Stoff besteht, nämlich Basalt,
wobei das erste Filament eine Glasübergangstemperatur von größer oder gleich 400 °C aufweist, wobei das zweite Filament aus einem metallischen Stoff besteht, wobei das zweite Filament das erste Filament kontaktiert, und wobei ein Kontaktbereich zwischen dem ersten Filament und dem zweiten Filament größer oder gleich 5 % des Umfangs des ersten Filaments ist.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Ein "Co-Filament" beschreibt eine Faser oder auch ein Filament mit praktisch endloser Länge, welche zumindest zwei sich in Längsrichtung erstreckende Teilfilamente unterschiedlicher stofflicher Beschaffenheit aufweist, wobei die beiden stofflich unterschiedlichen Filamente physikalisch und/oder chemisch miteinander zu dem Co-Filament verbunden sind. Insbesondere weist ein Co-Filament ein Verhältnis aus Länge zu Durchmesser von größer oder gleich 1.000 auf.

Unter einem "ersten Filament" wird eine Elementarfaser aus einem anorganischen Stoff verstanden, welche aus einer Düse erzeugt worden ist, insbesondere mittels einem Düsenziehverfahren oder einem Spinnverfahren. Unter einem "zweiten Filament" wird eine Faser verstanden, welche mittels Anhaftung einer metallischen Schmelze an dem ersten Filament und Erstarren an dem ersten Element erzeugt worden ist. Mit anderen Worten beschreibt ein Filament eine Faser mit praktisch endloser Länge.

Das erste Filament ist ein Basaltfilament Das zweite Filament kann aus einem metallorganischen Stoff bestehen. Unter einem "metallorganischen Stoff" wird ein Stoff verstanden, bei welchem ein organischer Rest oder eine organische Verbindung direkt an ein Metallatom gebunden ist. Es sei ausdrücklich darauf hingewiesen, dass ein metallischer Stoff und/oder ein metallorganischer Stoff keine Glasübergangstemperatur im Sinne dieser Beschreibung aufweisen. Vorzugsweise weist das Co-Filament und damit auch sowohl das erste Filament wie auch das zweite Filament eine Länge von größer oder gleich 10 cm auf, bevorzugt eine Länge von größer oder gleich 1 m und besonders bevorzugt eine Länge von größer oder gleich 10 m auf.

Das erste Filament kann unmittelbar mit dem zweiten Filament verbunden sein. Insbesondere weist das Co-Filament am Übergang zwischen dem ersten Filament zu dem zweiten Filament keinen von dem ersten und dem zweiten Filament abweichenden Stoff auf. Vorzugsweise sind das erste Filament und das zweite Filament nicht mittels einem Verbundstoff miteinander verbunden, insbesondere nicht mit einem Verbundstoff aufweisend Kunstharz oder dergleichen. Vorzugsweise weist das Co-Filament am Übergang zwischen dem ersten Filament zu dem zweiten Filament lediglich Rückstände von Luftfeuchtigkeit auf.

Vorzugsweise besteht ein Co-Filament aus einem ersten Filament und einem zweiten Filament. Insbesondere weist das Co-Filament neben dem ersten Filament und dem zweiten Filament keine weiteren Stoffe auf, insbesondere keine Schlichte.

Das erste Filament ist vorzugsweise vor dem Anhaften des zweiten Filaments mit dem ersten Filament nicht vorbehandelt, insbesondere nicht unter Einwirkung eines von dem Stoff des ersten Filaments und/oder zweiten Filaments abweichenden Stoff vorbehandelt.

Das erste Filament weist vorzugsweise beim Anhaften des zweiten Filaments an das erste Filament eine Temperatur auf, die größer ist als die Umgebungstemperatur. Vorzugsweise weist das erste Filament beim Anhaften des zweiten Filaments an das erste Filament eine Temperatur von größer oder gleich 40 °C auf, bevorzugt eine Temperatur von größer oder gleich 50 °C und besonders bevorzugt eine Temperatur von größer oder gleich 60 °C, wobei die Temperatur aus der ersten Wärme resultiert mit welcher das erste Filament urgeformt ist. Vorzugsweise weist das erste Filament beim Anhaften des zweiten Filaments an das erste Filament eine Temperatur auf, die aus der ersten Wärme resultiert mit welcher das erste Filament urgeformt ist. Insbesondere wird das erste Filament vor dem Anhaften des zweiten Filaments an das erste Filament nicht erwärmt.

Das erste Filament kann vor dem Anhaften des zweiten Filaments an das erste Filament ein Alter nach dem Urformen des ersten Filaments von kleiner oder gleich 1 Sekunde aufweisen, vorzugsweise ein Alter von kleiner oder gleich 0,5 Sekunden und besonders bevorzugt ein Alter von kleiner oder gleich 0,1 Sekunden. Vorteilhaft kann hierdurch verhindert oder verhindert werden, dass das erste Filament vor dem Anhaften des zweiten Filaments an dem ersten Filament mit der umgebenden Luftfeuchtigkeit reagieren kann.

Unter einem "anorganischen Stoff" wird ein Stoff verstanden, welcher keine pflanzlichen oder tierischen Bestandteile enthält oder diese nur in geringerem Maße als Verunreinigungen aufweist. Insbesondere wird unter einem anorganischen Stoff ein Naturstein verstanden, insbesondere Granit, Basalt, Schiefer, Sandstein oder Kalkstein. Vorzugsweise wird unter einem anorganischen Stoff ein Stoff verstanden, welcher Kohlenstoff nicht oder nur in geringem Umfang als Verunreinigung aufweist. Vorzugsweise meint ein anorganischer Stoff eine Keramik, ein kristallines Glas oder ein amorphes Glas, insbesondere ein E-Glas, ein S-Glas oder ein C-Glas.

Ein "metallischer Stoff" bezeichnet einen Stoff, der sich insbesondere im Periodensystem der Elemente links und unterhalb einer Trennungslinie von Bor bis Astat befindet.

Ein "aus einem Stoff bestehendes" Filament kann neben diesem Stoff in geringfügigem Maße auch Verunreinigungen aufweisen, insbesondere Verunreinigungen, welche prozesstechnisch bedingt sind. Weiterhin sei unter anderem auch an ein Mischmetall gedacht, welches aus einer Mehrzahl von metallischen Stoffen besteht. Insbesondere weist ein Mischmetall nur in geringfügigem Maße Verunreinigungen auf.

Die "Glasübergangstemperatur" eines Stoffes, insbesondere eines Glases, eines Polymers oder einer Keramik, beschreibt diejenige Temperatur, bei welcher der Stoff von seinem festen Aggregatzustand in einen zähflüssigen oder flüssigen Zustand übergeht.

Hier wird ein Co-Filament aufweisend zwei chemisch und/oder physikalisch verbundener Filamente unterschiedlicher stofflicher Beschaffenheit vorgeschlagen, wobei das erste Filament aus einem anorganischen Stoff besteht, nämlich Basalt, und das zweite Filament aus einem metallischen Stoff.

Hierdurch kann vorteilhaft eine Vereinigung der stofflichen Eigenschaften der unterschiedlichen Filamente in einem Co-Filament erreicht werden.

Vorzugsweise weist das erste Filament eine Glasübergangstemperatur von größer oder gleich 500 °C auf, bevorzugt eine Glasübergangstemperatur von größer oder gleich 570 °C und besonders bevorzugt eine Glasübergangstemperatur von größer oder gleich 600 °C.

Das Co-Filament weist ein erstes anorganisches Filament auf, wodurch für das Co-Filament eine hohe Zugfestigkeit, insbesondere eine Zugfestigkeit von mehr als 500 N/mm², und ein hoher E-Modul, insbesondere ein E-Modul von mehr als 55.000 N/mm², erreicht werden kann.

Das Co-Filament weist ein metallisches zweites Filament auf, wodurch eine besonders vorteilhafte Leitfähigkeit für Wärme und/oder elektrischen Strom erreicht werden kann, insbesondere eine elektrische Leitfähigkeit mit einem elektrischen Widerstand des Co-Filaments von weniger als 200 Ω/m.

Gemäß einer bevorzugten Ausführungsform kann durch das metallische zweite Filament ein elektrischer Widerstand des Co-Filaments von weniger als 150 Ω/m erreicht werden, bevorzugt ein elektrischer Widerstand des Co-Filaments von weniger als 110 Ω/m und besonders bevorzugt ein elektrischer Widerstand des Co-Filaments von weniger als 75 Ω/m. Weiterhin bevorzugt kann durch das metallische zweite Filament ein elektrischer Widerstand des Co-Filaments von weniger als 50 Ω/m erreicht werden, bevorzugt ein elektrischer Widerstand des Co-Filaments von weniger als 30 Ω/m und besonders bevorzugt ein elektrischer Widerstand des Co-Filaments von weniger als 20 Ω/m. Besonders bevorzugt kann durch das metallische zweite Filament ein elektrischer Widerstand des Co-Filaments von weniger als 10 Ω/m erreicht werden, bevorzugt ein elektrischer Widerstand des Co-Filaments von weniger als 8 Ω/m und besonders bevorzugt ein elektrischer Widerstand des Co-Filaments von weniger als 5 Ω/m.

Die Verknüpfung von dem ersten anorganischen Filament mit dem zweiten metallischen Filament ermöglicht weiterhin eine hervorragende Stoßfestigkeit, wodurch das vorgeschlagene Co-Filament gut für ballistische Anwendungen geeignet ist. Außerdem ergibt sich eine hervorragende Temperaturresistenz des Co-Filaments, insbesondere in Abhängigkeit der stofflichen Zusammensetzung des Co-Filaments, und eine gute Lichtbeständigkeit. Es konnte gezeigt werden, dass das vorgeschlagene Co-Filament eine Temperaturresistenz bis mindestens 400 °C aufweist, bevorzugt bis mindestens 500 °C und besonders bevorzugt bis mindestens 600 °C.

Durch die hohe Temperaturbeständigkeit kann das Co-Filament in warmen Umgebungsbedingungen eingesetzt werden, insbesondere in der Nähe von Motoren. Die thermische Leitfähigkeit ermöglicht dabei auch eine Ableitung der Wärme über das Co-Filament, insbesondere eine Kühlung eines Motors.

Zusätzlich erreicht das hier vorgeschlagene Co-Filament besonders gute Werte für die Ermüdungsbeständigkeit und die Korrosionsbeständigkeit.

Das hier vorgeschlagene Co-Filament besteht vorzugsweise nur aus natürlich vorkommenden Werkstoffen und ist damit besonders umweltfreundlich. Insbesondere kann das Co-Filament vollständig chemisch und/oder physikalisch recycliert werden.

Weiterhin weist das hier vorgeschlagene Co-Filament eine bessere chemische Beständigkeit auf als E-Glas.

Das Co-Filament ist zudem äußerst flexibel und kann zu einem Textil oder einem textilen Halbzeug weiterverarbeitet werden.

Ein Textil oder ein textiles Halbzeug kann faserbasiert sein, insbesondere ein Vlies. Ein Textil oder ein textiles Halbzeug kann textilbasiert sein, insbesondere eine Maschenware, vorzugsweise ein Gestrick oder ein Gewirk. Ein Textil oder ein textiles Halbzeug kann textilbasiert sein, insbesondere ein gestrecktes Fadensystem, vorzugsweise ein Gelege oder ein Tape. Ein Textil oder ein textiles Halbzeug kann textilbasiert sein, insbesondere ein verkreuztes Fadensystem, vorzugsweise ein Gewebe oder ein Geflecht. Die Halbzeuge aus dem Co-Filament bleiben weiterhin so flexibel, dass sie an ihrem designierten Einsatzort in nahezu jede gewünschte finale Form drapiert werden können.

Vorteilhaft kann bei einem Vlies erreicht werden, dass das Vlies eine besonders gute thermische Isolationswirkung aufweist, insbesondere durch den Einfluss des ersten anorganischen Filaments.

Zusätzlich kann das Co-Filament auch zu einem Filtergewebe und/oder einem Filtervlies weiterverarbeitet werden. Durch die sehr dünne erreichbare maximale Quererstreckung des Co-Filaments von kleiner oder gleich 23 µm kann ein besonders feines Filtermedium für kleine Partikel erreicht werden, welches jedoch weiterhin von Luft durchdrungen werden kann.

Hier wird konkret vorgeschlagen, dass das erste Filament bei der Herstellung des Co-Filaments mittels einem Düsenziehverfahren oder einem Spinnverfahren urgeformt wird und anschließend mit einem schmelzflüssigen Metall in Kontakt gebracht wird. Das Metall erstarrt im Kontakt zu dem ersten Filament, wodurch das Co-Filament entsteht. Durch diese Herstellung kann eine besonders stabile Anhaftung der beiden Filamente aneinander erreicht werden, wobei das zweite Filament mit dem ersten Filament physikalisch und/oder chemisch verbunden ist. Physikalisch sind die Filamente mittels Haftreibung miteinander verbunden. Chemisch kann es zu einer elektrostatischen Anhaftung des metallischen zweiten Filaments an den Molekülen des anorganischen ersten Filaments kommen. Weiterhin kann es zu einer kovalenten Bindung des metallischen zweiten Filaments mit den Molekülen des anorganischen ersten Filaments kommen.

Die Anhaftung des zweiten Filaments an dem ersten Filament ermöglicht vorteilhaft, dass das Co-Filament auch in einem Waschprozess nicht abgebaut wird, insbesondere wird das metallische zweite Filament nicht von dem anorganischen ersten Filament gewaschen.

Durch die Kombination der Materialeigenschaften des ersten Filaments mit den Materialeigenschaften des zweiten Filaments kann vorteilhaft ein Co-Filament erreicht werden, welches gegenüber den bekannten Filamenten neuartige Materialeigenschaften aufweist, insbesondere eine bessere chemische Anbindung, eine Hochtemperaturbeständigkeit, eine besonders hohe Zugfestigkeit und eine hohe chemische Beständigkeit in Kombination mit einer hervorragenden Leitfähigkeit für Wärme und/oder elektrischen Strom. Weiterhin vorteilhaft kann durch die unterschiedliche Materialkombination, insbesondere durch das zweite metallische Filament, eine Reflexionswirkung erzielt werden.

Das hier vorgeschlagene Co-Filament lässt sich kostengünstig herstellen, insbesondere mittels dem Verfahren nach dem fünften Aspekt der Erfindung. Aufgrund des geringen Preises können bestehende Produkte auf Basis des vorgeschlagenen Co-Filaments substituiert werden und neue Anwendungsbereiche erschlossen werden. Zudem können neuartige Anwendungen im Bereich Leichtbau erschlossen werden.

Gemäß einer zweckmäßigen Ausführungsform weist das erste Filament eine Glasübergangstemperatur von größer oder gleich 660 °C auf, bevorzugt eine Glasübergangstemperatur von größer oder gleich 800 °C und besonders bevorzugt eine Glasübergangstemperatur von größer oder gleich 1.000 °C.

Vorzugsweise weist das erste Filament eine Glasübergangstemperatur von größer oder gleich 700 °C auf, bevorzugt eine Glasübergangstemperatur von größer oder gleich 800 °C und besonders bevorzugt eine Glasübergangstemperatur von größer oder gleich 900 °C. Weiterhin vorzugsweise weist das erste Filament eine Glasübergangstemperatur von größer oder gleich 950 °C auf, bevorzugt eine Glasübergangstemperatur von größer oder gleich 1050 °C und besonders bevorzugt eine Glasübergangstemperatur von größer oder gleich 1100 °C.

Die angegebene Glasübergangstemperatur des ersten Filaments aus einem anorganischen Stoff ermöglicht vorteilhaft, dass das erste Filament eine besonders gute Temperaturbeständigkeit aufweist, sodass unter anderem auch metallische Stoffe mit einem vergleichsweise hohen Schmelzpunkt zu einem zweiten Filament schmelzflüssig anhaftend an dem ersten Filament des Co-Filaments verwendet werden können, wodurch Co-Filamente mit besonders bevorzugten Materialeigenschaften erreicht werden können.

Ausdrücklich sei darauf hingewiesen, dass die vorstehenden Werte für die Glasübergangstemperatur des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs Glasübergangstemperatur des ersten Filaments liefern.

Bevorzugt weist das erste Filament einen gebundenen Sauerstoffanteil von größer oder gleich 30 Massen-% auf, bevorzugt einen gebundenen Sauerstoffanteil von größer oder gleich 40 Massen-% und besonders bevorzugt einen gebundenen Sauerstoffanteil von größer oder gleich 44 Massen-%.

Weiterhin bevorzugt weist das erste Filament einen gebundenen Sauerstoffanteil von größer oder gleich 35 Massen-% auf, bevorzugt einen gebundenen Sauerstoffanteil von größer oder gleich 42 Massen-% und besonders bevorzugt einen gebundenen Sauerstoffanteil von größer oder gleich 45 Massen-%.

### Begrifflich sei hierzu Folgendes erläutert:

Unter dem "gebundenen Sauerstoffanteil" des ersten Filaments wird die Summe des gesamten in dem ersten Filament enthaltenen gebundenen Sauerstoffs verstanden, insbesondere die Summe des gebundenen Sauerstoffs jeglicher in dem anorganischen ersten Filament enthaltener Moleküle.

In Versuchen konnte gezeigt werden, dass der angegebene Bereich des gebundenen Sauerstoffanteils besonders vorteilhaft für die Anhaftung zwischen dem zweiten Filament und dem ersten Filament ist. Hierdurch kann ein besonders robustes Co-Filament erreicht werden.

Ausdrücklich sei darauf hingewiesen, dass die vorstehenden Werte für den gebundenen Sauerstoffanteil des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des gebundenen Sauerstoffanteils des ersten Filaments liefern.

Gemäß einer besonders zweckmäßigen Ausführungsform weist das erste Filament einen Siliciumdioxidanteil von größer oder gleich 45 Massen-% auf, bevorzugt einen Siliciumdioxidanteil von größer oder gleich 50 Massen-% und besonders bevorzugt einen Siliciumdioxidanteil von größer oder gleich 55 Massen-%.

Siliciumdioxid ist ein Netzwerkbildner, der die molekulare Grundstruktur des anorganischen ersten Filaments formt. Der oben genannte Anteil ermöglicht es, die Materialeigenschaften des anorganischen ersten Filaments zu verbessern, insbesondere die mechanischen Eigenschaften zu verbessern, insbesondere die Zugfestigkeit und/oder den E-Modul.

Versuche haben gezeigt, dass durch den oberhalb spezifizierten Bereich des Siliciumdioxidanteils insbesondere unter anderem die Temperaturbeständigkeit und die Temperaturwechselbeständigkeit des Co-Filaments erhöht werden kann.

Ausdrücklich sei darauf hingewiesen, dass die vorstehenden Werte für den Siliciumdioxidanteil des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Siliciumdioxidanteils des ersten Filaments liefern.

Weiterhin bevorzugt weist das erste Filament einen Aluminiumoxidanteil von größer oder gleich 12 Massen-% auf, bevorzugt einen Aluminiumoxidanteil von größer oder gleich 14 Massen-% und besonders bevorzugt einen Aluminiumoxidanteil von größer oder gleich 16 Massen-%.

Aluminiumoxid ist genau wie Siliciumdioxid ein Netzwerkbildner, der die molekulare Grundstruktur des anorganischen ersten Filaments formt. Der Anteil des Aluminiumoxids unterstützt die positiven Eigenschaften des ersten Filaments, insbesondere die mechanischen Eigenschaften, insbesondere die Zugfestigkeit und/oder den E-Modul.

Sofern als metallischer Stoff für das zweite Filament Aluminium verwendet wird, lässt sich, wie Versuche gezeigt haben, durch einen hohen Anteil des Aluminiumoxids in dem ersten Filament die Anhaftung zwischen dem anorganischen ersten Filament und dem zweiten Filament aus Aluminium besonders vorteilhaft verbessern.

Insbesondere ermöglicht das Aluminiumoxid eine direkte chemische Anbindung von Aluminium, sofern Aluminium als metallischer Stoff für das zweite Filament verwendet wird.

Ausdrücklich sei darauf hingewiesen, dass die vorstehenden Werte für den Aluminiumoxidanteil des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Aluminiumoxidanteils des ersten Filaments liefern.

Gemäß einer zweckmäßigen Ausführungsform weist das erste Filament einen Bortrioxidanteil von kleiner oder gleich 0,5 Massen-% auf, bevorzugt einen Bortrioxidanteil von kleiner oder gleich 0,1 Massen-% und besonders bevorzugt einen Bortrioxidanteil von kleiner oder gleich 0,01 Massen-%.

Bortrioxid ist gemäß einer EU-Chemikalienverordnung als Gefahrenstoff eingestuft. Insofern ist ein kleiner Bortrioxidanteil vorteilhaft.

Besonders bevorzugt weist das erste Filament keine nachweisbare Menge von Bortrioxid auf.

Ausdrücklich sei darauf hingewiesen, dass die vorstehenden Werte für den Bortrioxidanteil des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Bortrioxidanteils des ersten Filaments liefern.

Gemäß einer bevorzugten Ausführungsform weist das erste Filament einen Magnesiumoxidanteil von kleiner oder gleich 10 Massen-% auf, bevorzugt einen Magnesiumoxidanteil von kleiner oder gleich 7 Massen-% und besonders bevorzugt einen Magnesiumoxidanteil von kleiner oder gleich 5 Massen-%.

Es konnte in Versuchen gezeigt werden, dass ein steigender Magnesiumoxidanteil die Oberflächenspannung des anorganischen Ausgangsmaterials für das erste Filament in seiner flüssigen Phase verbessert, wodurch die Ziehfähigkeit des ersten Filaments in seiner flüssigen Phase verbessert werden kann. Weiterhin wird die Kristallisation mit einem steigenden Magnesiumdioxidanteil zurückgedrängt. Zusätzlich ermöglicht ein steigender Magnesiumoxidanteil eine Erhöhung der Härte des ersten Filaments. Außerdem kann durch einen steigenden Magnesiumoxidanteil die Temperaturwechselbeständigkeit des ersten Filaments verbessert werden, insbesondere da ein steigender Magnesiumoxidanteil die Wärmedehnung des ersten Filaments verringert. Es konnte auch gezeigt werden, dass durch einen steigenden Magnesiumoxidanteil die Wasser- und/oder Säurebeständigkeit des ersten Filaments verbessert werden kann und dass ein steigender Magnesiumoxidanteil die Entspannung (Kühlung) des Glases erleichtert. Weiterhin weist das erste Filament gemäß einer zweckmäßigen Ausführungsform einen Calciumoxidanteil von kleiner oder gleich 20 Massen-% auf, bevorzugt einen Calciumoxidanteil von kleiner oder gleich 10 Massen-% und besonders bevorzugt einen Calciumoxidanteil von kleiner oder gleich 8 Massen-%.

Hinsichtlich des Calciumoxidanteils in dem ersten Filament konnte in Versuchen gezeigt werden, dass ein steigender Calciumoxidanteil stark die Zugfestigkeit und/oder die Biegefestigkeit des ersten Filaments erhöhen kann. Weiterhin kann ein steigender Calciumoxidanteil die Oberflächenspannung und die Dichte des anorganischen Ausgangsmaterials für das erste Filament in seiner flüssigen Phase verbessern. Auch kann ein steigender Calciumoxidanteil die Neigung zur Kristallisation vergrößern und die chemische Beständigkeit des ersten Filaments verbessern.

Gemäß einer besonders bevorzugten Ausführungsform ist das Verhältnis des Aluminiumoxidanteils zum Magnesiumoxidanteil und/oder zum Calciumoxidanteil des ersten Filaments größer oder gleich 1,0, bevorzugt größer oder gleich 1,5 und besonders bevorzugt größer oder gleich 2,0.

Versuche haben gezeigt, dass die mechanische Belastbarkeit des ersten Filaments mit einem steigenden Verhältnis aus Aluminiumoxidanteil zum Magnesiumoxidanteil und/oder zum Calciumoxidanteil verbessert werden kann.

Gemäß der Erfindung ist das erste Filament ein Basaltfilament. Begrifflich sei hierzu Folgendes erläutert:
Unter "Basalt" wird ein Basaltgestein verstanden, vorzugsweise ein natürlich vorkommendes Basaltgestein ohne chemische Additive.

Unter einem "Basaltfilament" wird ein anorganisches Filament verstanden, welches Basalt zu mehr als 90 Massen-% aufweist oder aus Basalt besteht.

Basaltfasern und deren Herstellung sind im Stand der Technik bereits bekannt, wodurch Vorteile dahingehend erzielt werden können, dass die Herstellung des Co-Filaments zumindest hinsichtlich der Basaltfaser bereits gut erprobt ist.

Weiterhin weist Basalt bereits viele der oberhalb erläuterten vorteilhaften Stoffanteile und/oder Stoffzusammensetzungen auf, sodass hierdurch der Aufwand zur Herstellung des anorganischen ersten Filaments vorteilhaft reduziert werden kann.

Weiterhin ist Basalt ein vergleichsweise kostengünstiger und gut verfügbarer Rohstoff, wodurch auch die Verfügbarkeit durch das Co-Filament steigt und der Preis sinken kann. Insbesondere benötigt die Faserherstellung von Basaltfasern im Vergleich zu Carbonfasern oder Glasfasern oder Metallfasern deutlich weniger Energie.

Gemäß einer besonders zweckmäßigen Ausführungsform weist das zweite Filament einen Aluminiumanteil von größer oder gleich 98 Massen-% auf, bevorzugt einen Aluminiumanteil von größer oder gleich 99 Massen-% und besonders bevorzugt einen Aluminiumanteil von größer oder gleich 99,5 Massen-%.

Aluminium ist ein metallischer Stoff, welcher eine besonders gute Wärmeleitfähigkeit und gleichzeitig eine sehr gute elektrische Leitfähigkeit aufweist, wodurch diese Eigenschaften für das hier vorgeschlagene Co-Filament besonders vorteilhaft genutzt werden können.

Außerdem weist Aluminium eine sehr gute Verformbarkeit aus, sodass die Flexibilität des Co-Filaments durch den Einsatz von Aluminium als Metall sehr gut ausgeprägt werden kann. Die gute Verformbarkeit führt auch zu einer Reduzierung einer etwaigen Querbelastung auf das erste Filament durch Verformungskräfte des zweiten Filaments, wodurch das Co-Filament flexibler einsetzbar ist und die Langlebigkeit des Co-Filaments vorteilhaft gesteigert werden kann.

Hierzu ergibt sich durch die Verwendung von Aluminium noch der vorzugsweise synergetisch wirkende Effekt, dass die Anhaftung zwischen dem Aluminium an dem ersten Filament, insbesondere durch die chemische Verbindung mit dem Aluminiumoxid, gegenüber anderen Metallen verbessert werden kann.

Zusätzlich ermöglicht der vergleichsweise geringe Schmelzpunkt von Aluminium bei circa 660 °C, dass das erste Filament für die Herstellung des Co-Filaments eine vergleichsweise niedrige Glasübergangstemperatur aufweisen kann.

Die gute Korrosionsbeständigkeit von Aluminium erhöht weiterhin die Flexibilität der möglichen designierten Einsatzumgebungen für das Co-Filament.

Ausdrücklich sei darauf hingewiesen, dass die vorstehenden Werte für den Aluminiumanteil des zweiten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Aluminiumanteils des zweiten Filaments liefern.

Gemäß einer optionalen Ausführungsform weist das zweite Filament einen Kupferanteil von größer oder gleich 98 Massen-% auf, bevorzugt einen Kupferanteil von größer oder gleich 99 Massen-% und besonders bevorzugt einen Kupferanteil von größer oder gleich 99,5 Massen-%. Weiterhin bevorzugt weist das zweite Filament einen Kupferanteil von größer oder gleich 90 Massen-% auf, bevorzugt einen Kupferanteil von größer oder gleich 94 Massen-% und besonders bevorzugt einen Kupferanteil von größer oder gleich 96 Massen-%.

Besonders bevorzugt besteht das zweite Filament im Wesentlichen aus Kupfer, vorzugsweise besteht das zweite Filament aus Kupfer und weist nur in geringerem Maße Verunreinigungen auf.

Optional weist das erste Filament eine runde oder eine eckige Querschnittsfläche auf.

Hier sei unter anderem daran gedacht, dass das mit einem Düsenziehverfahren oder einem Spinnverfahren hergestellte erste Filament einen runden Querschnitt, insbesondere einen ovalen Querschnitt, oder einen eckigen Querschnitt aufweist, insbesondere einen quadratischen Querschnitt, einen rechteckigen Querschnitt, einen sechseckigen Querschnitt oder einen n-eckigen Querschnitt. Weiterhin sei auch an zusammengesetzte Querschnittsformen gedacht, welche sich aus zumindest zwei der vorgenannten Grundformen zusammensetzen.

Dabei sei auch daran gedacht, dass die Form des zweiten Filaments an die Form des ersten Filaments angepasst ist. Weist das erste Filament einen runden Querschnitt auf, so sei bei dem zweiten Filament vorzugsweise an eine sichelförmige Form oder eine Form eines Hohlzylinders oder eine ebenfalls runde oder ovale Form gedacht. Weist das erste Filament eine rechteckige Form auf, so sei bei dem zweiten Filament ebenfalls vorzugsweise an eine rechteckige Form oder an eine das erste Filament teilweise umschließende sichelartige Form oder an eine runde oder ovale Form oder an einen Hohlkörper gedacht, welche das erste Filament vollständig umschließt. Entsprechendes ist in angepasster Form auch allgemein für ein erstes Filament mit n-eckigem Querschnitt denkbar. Mit anderen Worten weist das zweite Filament im Kontaktbereich zu dem ersten Filament eine dem ersten Filament angepasste und mit dem ersten Filament korrespondierende Form auf.

Auf der dem ersten Filament abgewandten Seite weist das zweite Filament vorzugsweise eine krummlinige Form auf, welche vorzugsweise während der Herstellung des Co-Filaments durch die Oberflächenspannung des zeitweise schmelzflüssigen metallischen Stoffs hervorgerufen wird.

Gemäß einer bevorzugten Ausführungsform weist das erste Filament eine Quererstreckung in einem Bereich von größer oder gleich 3,5 µm bis kleiner oder gleich 25 µm auf, bevorzugt eine Quererstreckung in einem Bereich von größer oder gleich 10 µm bis kleiner oder gleich 20 µm und besonders bevorzugt eine Quererstreckung in einem Bereich von größer oder gleich 11 µm bis kleiner oder gleich 18 µm.

Weiterhin vorzugsweise weist das erste Filament eine Quererstreckung in einem Bereich von größer oder gleich 11 µm bis kleiner oder gleich 16 µm auf, bevorzugt eine Quererstreckung in einem Bereich von größer oder gleich 12 µm bis kleiner oder gleich 15 µm und besonders bevorzugt eine Quererstreckung in einem Bereich von größer oder gleich 12 µm bis kleiner oder gleich 14 µm.

### Begrifflich sei hierzu Folgendes erläutert:

Unter einer "Quererstreckung" wird die Erstreckung eines Filaments quer zur Längserstreckungsrichtung des Filaments verstanden, insbesondere die Erstreckung des ersten Filaments quer zur Längserstreckungsrichtung des ersten Filaments oder die Erstreckung des Co-Filaments quer zur Längserstreckungsrichtung des Co-Filaments.

Die oberhalb angegebenen Werte für die Quererstreckung des ersten Filaments ermöglichen im Zusammenspiel mit einer vorzugsweise ebenfalls optimierten Geometrie des zweiten Filaments eine optimale Ausprägung der Materialeigenschaften des Co-Filaments für eine Vielzahl von Applikationsfällen.

Ausdrücklich sei darauf hingewiesen, dass die vorstehenden Werte für die Quererstreckung des ersten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der Quererstreckung des ersten Filaments liefern.

Bevorzugt weist das zweite Filament eine maximale Wandstärke von kleiner oder gleich 200 µm auf, bevorzugt eine maximale Wandstärke von kleiner oder gleich 160 µm und besonders bevorzugt eine maximale Wandstärke von kleiner oder gleich 130 µm.

Weiterhin bevorzugt weist das zweite Filament eine maximale Wandstärke von kleiner oder gleich 100 µm auf, bevorzugt eine maximale Wandstärke von kleiner oder gleich 75 µm und besonders bevorzugt eine maximale Wandstärke von kleiner oder gleich 50 µm. Weiterhin bevorzugt weist das zweite Filament eine maximale Wandstärke von kleiner oder gleich 30 µm auf, bevorzugt eine maximale Wandstärke von kleiner oder gleich 20 µm und besonders bevorzugt eine maximale Wandstärke von kleiner oder gleich 15 µm. Weiterhin bevorzugt weist das zweite Filament eine maximale Wandstärke von kleiner oder gleich 10 µm auf, bevorzugt eine maximale Wandstärke von kleiner oder gleich 8 µm und besonders bevorzugt eine maximale Wandstärke von kleiner oder gleich 5 µm. Besonders bevorzugt weist das zweite Filament eine maximale Wandstärke von kleiner oder gleich 1 µm auf, bevorzugt eine maximale Wandstärke von kleiner oder gleich 0,1 µm und besonders bevorzugt eine maximale Wandstärke von kleiner oder gleich 0,01 µm.

Gemäß einer zweckmäßigen Ausführungsform weist das zweite Filament, wobei das zweite Filament das erste Filament vollständig umschließt, eine Wandstärke, insbesondere eine maximale Materialstärke des zweiten Filaments, von kleiner oder gleich 30 µm auf, bevorzugt eine maximale Wandstärke von kleiner oder gleich 20 µm und besonders bevorzugt eine maximale Wandstärke von kleiner oder gleich 15 µm. Weiterhin bevorzugt weist das zweite Filament eine Wandstärke von kleiner oder gleich 8 µm auf, bevorzugt eine maximale Wandstärke von kleiner oder gleich 5 µm und besonders bevorzugt eine maximale Wandstärke von kleiner oder gleich 2 µm.

### Begrifflich sei hierzu Folgendes erläutert:

Unter einer "maximalen Wandstärke" wird die maximale Wandstärke des Filaments, insbesondere des zweiten Filaments, eines definierten Querschnitts verstanden.

Besonders bevorzugt weist das zweite Filament eine maximale Wandstärke von größer oder gleich 0,2 µm auf, bevorzugt eine maximale Wandstärke von größer oder gleich 0,5 µm und besonders bevorzugt eine maximale Wandstärke von größer oder gleich 1 µm.

Weiterhin besonders bevorzugt weist das zweite Filament eine maximale Wandstärke von größer oder gleich 1,5 µm auf, bevorzugt eine maximale Wandstärke von größer oder gleich 2 µm und besonders bevorzugt eine maximale Wandstärke von größer oder gleich 3 µm.

Bei Versuchen wurde herausgefunden, dass die oberhalb spezifizierte maximale Wandstärke des zweiten Filaments hinsichtlich ihrer Maximalwerte und/oder hinsichtlich ihrer Minimalwerte einen sehr guten Kompromiss zwischen Materialbedarf und erreichbaren Eigenschaften des Co-Filaments ermöglicht, insbesondere auch im Hinblick auf eine vorzugsweise optimierte Quererstreckung des ersten Filaments.

Ausdrücklich sei darauf hingewiesen, dass die vorstehenden Werte für die maximale Wandstärke des zweiten Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der maximalen Wandstärke des zweiten Filaments liefern.

Gemäß einer bevorzugten Ausführungsform weist das Co-Filament eine maximale Quererstreckung in einem Bereich von größer oder gleich 10 µm bis kleiner oder gleich 55 µm auf, bevorzugt eine maximale Quererstreckung in einem Bereich von größer oder gleich 10 µm bis kleiner oder gleich 40 µm und besonders bevorzugt eine maximale Quererstreckung in einem Bereich von größer oder gleich 11 µm bis kleiner oder gleich 35 µm.

Weiterhin gemäß einer bevorzugten Ausführungsform weist das Co-Filament eine maximale Quererstreckung in einem Bereich von größer oder gleich 11 µm bis kleiner oder gleich 30 µm auf, bevorzugt eine maximale Quererstreckung in einem Bereich von größer oder gleich 12 µm bis kleiner oder gleich 25 µm und besonders bevorzugt eine maximale Quererstreckung in einem Bereich von größer oder gleich 12 µm bis kleiner oder gleich 20 µm. Vorzugsweise weist das Co-Filament eine maximale Quererstreckung in einem Bereich von größer oder gleich 12 µm bis kleiner oder gleich 18 µm auf, bevorzugt eine maximale Quererstreckung in einem Bereich von größer oder gleich 13 µm bis kleiner oder gleich 17 µm und besonders bevorzugt eine maximale Quererstreckung in einem Bereich von größer oder gleich 14 µm bis kleiner oder gleich 16 µm.

Besonders bevorzugt ist die maximale Quererstreckung des Co-Filaments kleiner oder gleich 18 µm.

Hinsichtlich einer Applikationsanalyse wurde herausgefunden, dass die vorstehenden Werte für die maximale Quererstreckung des Co-Filaments besonders vorteilhaft für die Mehrheit der Anwendungsfälle sind.

Insgesamt lässt sich hierdurch ein besonders dünnes Filament erreichen, welches gleichzeitig neuartige Materialeigenschaften aufweist. Dünne Filamente ermöglichen insbesondere eine Filtration besonders feiner Partikel.

Ausdrücklich sei darauf hingewiesen, dass die vorstehenden Werte für die maximale Quererstreckung des Co-Filaments nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der maximalen Quererstreckung des Co-Filaments liefern.

Gemäß einer optionalen Ausführungsform ist ein Kontaktbereich zwischen dem ersten Filament und dem zweiten Filament größer oder gleich 1 % des Umfangs des ersten Filaments, bevorzugt größer oder gleich 5 % des Umfangs des ersten Filaments und besonders bevorzugt größer oder gleich 10 % des Umfangs des ersten Filaments.

Bevorzugt ist ein Kontaktbereich zwischen dem ersten Filament und dem zweiten Filament größer oder gleich 20 % des Umfangs des ersten Filaments, bevorzugt größer oder gleich 30 % des Umfangs des ersten Filaments und besonders bevorzugt größer oder gleich 40 % des Umfangs des ersten Filaments. Weiterhin bevorzugt ist ein Kontaktbereich zwischen dem ersten Filament und dem zweiten Filament größer oder gleich 50 % des Umfangs des ersten Filaments, bevorzugt größer oder gleich 60 % des Umfangs des ersten Filaments und besonders bevorzugt größer oder gleich 70 % des Umfangs des ersten Filaments. Besonders bevorzugt ist ein Kontaktbereich zwischen dem ersten Filament und dem zweiten Filament größer oder gleich 80 % des Umfangs des ersten Filaments, bevorzugt größer oder gleich 90 % des Umfangs des ersten Filaments und besonders bevorzugt gleich 100 % des Umfangs des ersten Filaments.

### Begrifflich sei hierzu Folgendes erläutert:

Unter dem "Kontaktbereich" wird die Kontaktlinie zwischen dem ersten Filament und dem zweiten Filament verstanden.

Optional ist ein Kontaktbereich zwischen dem ersten Filament und dem zweiten Filament kleiner oder gleich 95 % des Umfangs des ersten Filaments, bevorzugt kleiner oder gleich 90 % des Umfangs des ersten Filaments und besonders bevorzugt kleiner oder gleich 85 % des Umfangs des ersten Filaments. Bevorzugt ist ein Kontaktbereich zwischen dem ersten Filament und dem zweiten Filament kleiner oder gleich 75 % des Umfangs des ersten Filaments, bevorzugt kleiner oder gleich 65 % des Umfangs des ersten Filaments und besonders bevorzugt kleiner oder gleich 55 % des Umfangs des ersten Filaments.

Durch die Größe des Kontaktbereichs kann vorteilhaft ein Kompromiss zwischen dem Materialbedarf für das zweite Filament und den Materialeigenschaften des Co-Filaments optimiert werden.

Nach einem zweiten Aspekt der Erfindung löst die Aufgabe ein Roving aufweisend ein Co-Filament nach dem ersten Aspekt der Erfindung.

### Begrifflich sei hierzu Folgendes erläutert:

Unter einem "Roving" wird ein Bündel mehrerer Co-Filamente zu einem Strang verstanden, insbesondere ein Bündel aus parallel angeordneten Co-Filamenten.

Es versteht sich, dass sich die Vorteile eines Co-Filaments nach dem ersten Aspekt der Erfindung, wie vorstehend beschrieben, unmittelbar auf einen Roving aufweisend Co-Filamente gemäß dem ersten Aspekt der Erfindung erstrecken.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe ein Garn aufweisend ein Co-Filament nach dem ersten Aspekt der Erfindung.

### Begrifflich sei hierzu Folgendes erläutert:

Unter einem "Garn" wird ein Bündel mehrerer Co-Filamente zu einem Strang verstanden, wobei die Co-Filamente des Garns um die Längsachse des Garns mit Drehungen beaufschlagt sind. Insbesondere weist ein Garn ein Verhältnis aus Garnlänge zu Garndurchmesser von größer oder gleich 100 auf.

Es versteht sich, dass sich die Vorteile eines Co-Filaments nach dem ersten Aspekt der Erfindung wie vorstehend beschrieben, unmittelbar auf ein Garn aufweisend Co-Filamente gemäß dem ersten Aspekt der Erfindung erstrecken.

Es sei ausdrücklich darauf hingewiesen, dass der Gegenstand des dritten Aspekts mit dem Gegenstand des vorstehenden Aspekts der Erfindung vorteilhaft kombinierbar ist, und zwar sowohl einzeln oder in beliebiger Kombination kumulativ.

Vorzugsweise löst die Aufgabe eine Kurzschnittfaser oder eine Langschnittfaser, wobei die Kurzschnittfaser oder die Langschnittfaser ein geschnittenes Co-Filament nach dem ersten Aspekt der Erfindung oder einen geschnittenen Roving nach dem zweiten Aspekt der Erfindung oder ein geschnittenes Garn nach dem dritten Aspekt der Erfindung aufweist.

Unter einer "Kurzschnittfaser" wird eine Faser verstanden, die durch Schneiden aus einem Co-Filament nach dem ersten Aspekt der Erfindung oder einem Roving nach dem zweiten Aspekt der Erfindung oder einem Garn nach dem dritten Aspekt der Erfindung hergestellt worden ist, wobei eine Kurzschnittfaser eine Länge von kleiner oder gleich 6 mm aufweist.

Unter einer "Langschnittfaser" wird eine Faser verstanden, die durch Schneiden aus einem Co-Filament nach dem ersten Aspekt der Erfindung oder einem Roving nach dem zweiten Aspekt der Erfindung oder einem Garn nach dem dritten Aspekt der Erfindung hergestellt worden ist, wobei eine Langschnittfaser eine Länge von kleiner oder gleich 60 mm und länger als 6 mm aufweist.

Nach einem vierten Aspekt der Erfindung löst die Aufgabe ein Halbzeug aufweisend ein Co-Filament nach dem ersten Aspekt der Erfindung und/oder aufweisend ein Roving nach dem zweiten Aspekt der Erfindung.

### Begrifflich sei hierzu Folgendes erläutert:

Unter einem "Halbzeug" oder auch unter einem "textilen Halbzeug" wird ein aus Co-Filamenten vorgefertigtes Rohmaterial verstanden, insbesondere ein Textil, wobei das vorgefertigte Rohmaterial das Co-Filament vorzugsweise in einer grundlegenden geometrischen Form aufweist. Ein Textil oder ein textiles Halbzeug kann faserbasiert sein, insbesondere ein Vlies. Ein Textil oder ein textiles Halbzeug kann textilbasiert sein, insbesondere eine Maschenware, vorzugsweise ein Gestrick oder ein Gewirk. Ein Textil oder ein textiles Halbzeug kann textilbasiert sein, insbesondere ein gestrecktes Fadensystem, vorzugsweise ein Gelege oder ein Tape. Ein Textil oder ein textiles Halbzeug kann textilbasiert sein, insbesondere ein verkreuztes Fadensystem, vorzugsweise ein Gewebe oder ein Geflecht.

Vorzugsweise wird unter einem Halbzeug eine Kurzschnittfaser oder eine Langschnittfaser verstanden, wobei die Kurzschnittfaser oder die Langschnittfaser ein geschnittenes Co-Filament nach dem ersten Aspekt der Erfindung oder einen geschnittenen Roving nach dem zweiten Aspekt der Erfindung oder ein geschnittenes Garn nach dem dritten Aspekt der Erfindung aufweist.

Weiterhin vorzugsweise wird unter einem Vlies ein Halbzeug verstanden, welches aus Kurzschnittfasern und/oder aus Langschnittfasern aufgebaut ist, wobei die Kurzschnittfaser und/oder die Langschnittfaser ein geschnittenes Co-Filament nach dem ersten Aspekt der Erfindung oder einen geschnittenen Roving nach dem zweiten Aspekt der Erfindung oder ein geschnittenes Garn nach dem dritten Aspekt der Erfindung aufweist.

Halbzeuge aufweisend das Co-Filament nach dem ersten Aspekt der Erfindung können eine hervorragende Alternative zu massiven Metallplatten zur Abschirmung vor elektromagnetischen Wellen darstellen, wodurch das Gewicht einer Abschirmung drastisch reduziert werden kann. Dies ist insbesondere im Bereich Mobilität von besonderer Relevanz.

Es versteht sich, dass sich die Vorteile eines Co-Filaments nach dem ersten Aspekt der Erfindung wie vorstehend beschrieben, unmittelbar auf ein Halbzeug aufweisend Co-Filamente gemäß dem ersten Aspekt der Erfindung erstrecken.

Es sei ausdrücklich darauf hingewiesen, dass der Gegenstand des vierten Aspekts mit dem Gegenstand des vorstehenden Aspekts der Erfindung vorteilhaft kombinierbar ist, und zwar sowohl einzeln oder in beliebiger Kombination kumulativ.

Nach einem fünften Aspekt der Erfindung löst die Aufgabe eine Verwendung eines Co-Filaments nach dem ersten Aspekt der Erfindung zur Leitung von elektrischen Strömen und/oder zur Leitung von Wärme und/oder zur Abschirmung von elektromagnetischen Wellen und/oder als Bestandteil einer Antenne. So lässt sich insbesondere bei einer Verwendung des Co-Filaments für eine Antenne wegen der besonders guten elektrischen Leitfähigkeit des Co-Filaments vorteilhaft erreichen, dass das Co-Filament einen elektromagnetischen Impuls von der Antenne ableitet, insbesondere bei einem elektromagnetischen Impuls mit niedriger Frequenz. Hierdurch kann die Antenne wirksam vor einem elektromagnetischen Impuls geschützt werden.

Das Co-Filament gemäß dem ersten Aspekt der Erfindung weist unter anderem Vorteile hinsichtlich seiner elektrischen und/oder thermischen Leitfähigkeit und/oder seiner Zugfestigkeit und/oder seiner Temperaturbeständigkeit und/oder seiner chemischen Beständigkeit und/oder seiner Porosität und/oder seiner Drapierbarkeit und/oder seiner antiviralen Wirkung und/oder seiner Flammbeständigkeit auf.

Diese Vorteile lassen sich in einer Vielzahl von unterschiedlichen Anwendungsfällen zur Verbesserung der Funktionalität von Produkten einsetzen. Unter anderem sei hier konkret an die Verwendung des Co-Filaments für ein Batteriegehäuse, einer Leiterbahn, insbesondere für die Verbindung von Sensoren und/oder Aktoren und/oder Stromquellen in Textilien, vorzugsweise zur Heizung einer smarten Textilie, insbesondere einer Skisocke und/oder einer Winterjacke, und/oder zur elektromagnetischen Abschirmung einer smarten Textilie, insbesondere eines Ponchos und/oder einer Umstandskleidung und/oder einer Arbeitskleidung, und/oder zur Stromableitung eines Filters, insbesondere eines Schwerölfilters, und/oder zur Verbesserung der Filtrationswirkung, insbesondere bei einem Luftfilter, und/oder für eine elektromagnetische Abschirmtapete, insbesondere für CT-Räume und/oder den EMP-Schutz und/oder für einen Serverraum, und/oder für eine elektromagnetische Abschirmgardiene, insbesondere für den EMP-Schutz und/oder für einen Serverraum, und/oder als Verstärkungsfaser für metallische Gegenstände, insbesondere für eine Alufelge und/oder eine Alukarosserie und/oder für ein Bauteil aus Aluminiumguss und/oder dergleichen, und/oder als Verbundhilfsmittel, insbesondere für Textilbeton und/oder ein Organoblech und/oder dergleichen, und/oder für eine Schutzbekleidung, insbesondere für eine antivirale Bekleidung und/oder für eine Schutzmaske und/oder für eine Feuerwehrbekleidung und/oder dergleichen, und/oder für eine Sensorik, insbesondere für eine Antenne und/oder eine Strukturüberwachung und/oder eine Messwerterfassung, und/oder für einen Dipol, insbesondere für eine Antenne und/oder einen Täuschkörper, und/oder für eine Dämmung, insbesondere für einen Dämmkörper und/oder einen Reflektor, gedacht.

Es versteht sich, dass sich die Vorteile eines Co-Filaments nach dem ersten Aspekt der Erfindung wie vorstehend beschrieben, unmittelbar auf die Verwendung eines Co-Filaments gemäß dem ersten Aspekt der Erfindung erstrecken.

Es sei ausdrücklich darauf hingewiesen, dass der Gegenstand des fünften Aspekts mit dem Gegenstand des vorstehenden Aspekts der Erfindung vorteilhaft kombinierbar ist, und zwar sowohl einzeln oder in beliebiger Kombination kumulativ.

Nach einem sechsten Aspekt der Erfindung löst die Aufgabe ein Verfahren zur Herstellung eines Co-Filaments nach dem ersten Aspekt der Erfindung aufweisend die nachfolgenden Schritte:
- Bilden des ersten Filaments mit einem Düsenziehverfahren oder einem Spinnverfahren; und
- Zumindest teilweises Beschichten des ersten Filaments mit dem zweiten Filament.

Hier wird nun ein Verfahren zur Herstellung des vorteilhaften Co-Filaments nach dem ersten Aspekt der Erfindung vorgeschlagen.

Unter anderem sei bei dem hier vorgeschlagenen Verfahren daran gedacht, dass das Beschichten des ersten Filaments mit dem zweiten Filament durch Kontaktieren des ersten Filaments mit einem schmelzflüssigen Metall erfolgt, wobei das erste Filament in seiner Längserstreckungsrichtung über die Kontaktstelle geführt wird. Hierdurch haftet das schmelzflüssige Metall an dem ersten Filament, wird von diesem in seiner Bewegungsrichtung mitgeführt, geht in den festen Aggregatzustand über und bildet so das an dem ersten Filament anhaftende zweite Filament, insbesondere das mit dem ersten Filament kontaktierte zweite Filament.

Das erste Filament kann dabei vor dem Beschichten mit dem zweiten Filament aus der Schmelze gezogen werden.

Vorzugsweise wird das erste Filament mit dem schmelzflüssigen metallischen Stoff kontaktiert, vorzugsweise nachdem das erste Filament seine Glasübergangstemperatur unterschritten hat, weiterhin vorzugsweise weist das erste Filament zum Zeitpunkt der Kontaktierung eine Temperatur auf, die oberhalb der Schmelztemperatur des metallischen Stoffs liegt. Die Kontaktierung des anorganischen ersten Filaments mit dem geschmolzenen Metall ist insbesondere möglich, da die Kontaktzeit zwischen der anorganischen ersten Faser und dem schmelzflüssigen metallischen Stoff im Bereich weniger Millisekunden erfolgt. Vorzugsweise kann durch die hier vorgeschlagene geringe Kontaktzeit erreicht werden, dass eine Materialeigenschaft der anorganischen Faser durch die Temperatureinwirkung des schmelzflüssigen metallischen Stoffs nicht verschlechtert wird.

Dabei wird vorgeschlagen, dass das erste Filament an einer Kontaktlippe mit dem metallischen Stoff in Verbindung gebracht wird. Da der metallische Stoff im Bereich der Kontaktlippe schmelzflüssig ist, sei unter anderem daran gedacht die Lippe aus einem Material zu bilden, welches oberhalb der Schmelztemperatur des metallischen Stoffes als Festkörper vorliegt. Insbesondere sei hierbei an eine Lippe aus Keramik gedacht, welche mit dem metallischen Stoff benetzt ist, sodass das erste Filament mit dem metallischen Stoff angrenzend an die Lippe kontaktiert werden kann.

Gemäß einer zweckmäßigen Ausführungsform sei daran gedacht, dass die Lippe während der Herstellung des Co-Filaments vibriert. Hierdurch kann vorteilhaft ein kontinuierliches Fließverhalten des schmelzflüssigen metallischen Stoffs verbessert werden, wodurch kleinere Schichtdicken und/oder homogenere Schichtdicken des zweiten Filaments, insbesondere eine kleinere maximale Wandstärke und/oder eine homogenere maximale Wandstärke des zweiten Filaments, erreicht werden können.

Versuche haben gezeigt, dass das Co-Filament vorzugsweise mit einer Geschwindigkeit in einem Bereich von größer oder gleich 500 m/min bis kleiner oder gleich 4.000 m/min hergestellt werden kann, bevorzugt mit einer Geschwindigkeit in einem Bereich von größer oder gleich 2.500 m/min bis kleiner oder gleich 1.300 m/min und besonders bevorzugt mit einer Geschwindigkeit in einem Bereich von größer oder gleich 900 m/min bis kleiner oder gleich 1.500 m/min. Hierdurch kann vorteilhaft die Produktivität gegenüber dem Stand der Technik erhöht werden, sodass hergestellte Fasern kostengünstig hergestellt werden können.

Vorzugsweise wird das Co-Filament nach dem zumindest teilweisen Beschichten des ersten Filaments mit dem zweiten Filament aufgewickelt.

Es sei ausdrücklich darauf hingewiesen, dass der Gegenstand des sechsten Aspekts mit dem Gegenstand des vorstehenden Aspekts der Erfindung vorteilhaft kombinierbar ist, und zwar sowohl einzeln oder in beliebiger Kombination kumulativ.

Weitere Vorteile, Einzelheiten und Merkmale der Erfindung ergeben sich nachfolgend aus den erläuterten Ausführungsbeispielen. Dabei zeigen im Einzelnen:
- Figur 1:: schematisch eine erste Ausführungsform eines Co-Filaments;
- Figur 2:: schematisch eine zweite Ausführungsform eines Co-Filaments;
- Figur 3:: schematisch einen Querschnitt in Längsrichtung der ersten Ausführungsform eines Co-Filaments;
- Figur 4:: schematisch einen Querschnitt in Längsrichtung der zweiten Ausführungsform eines Co-Filaments;
- Figur 5:: schematisch eine dritte Ausführungsform eines Co-Filaments;
- Figur 6:: schematisch eine vierte Ausführungsform eines Co-Filaments;
- Figur 7:: schematisch eine fünfte Ausführungsform eines Co-Filaments;
- Figur 8:: schematisch eine erste Ausführungsform eines Garns; und
- Figur 9:: schematisch eine zweite Ausführungsform eines Garns.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

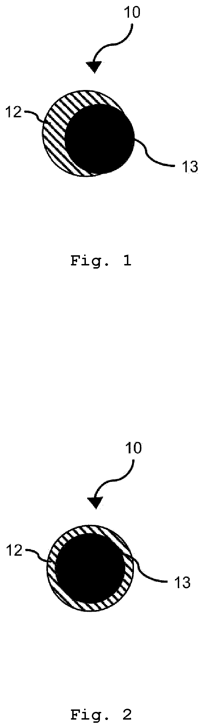

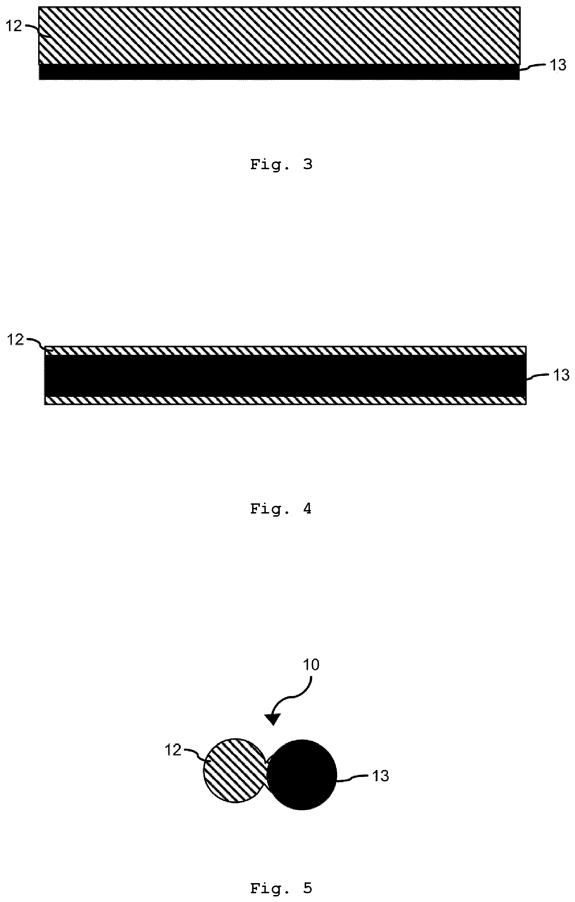

Das Co-Filament 10 gemäß einer ersten Ausführungsform in Fig. 1 und Fig. 3 besteht im Wesentlichen aus einem ersten Filament 13 aus einem anorganischen Stoff und einem zweiten Filament 12 aus einem metallischen Stoff.

Das erste Filament 13 weist eine Glasübergangstemperatur von größer oder gleich 4000 °C auf.

Das zweite Filament 12 ist sichelförmig ausgebildet und kontaktiert das erste Filament 13.

Das Co-Filament 10 gemäß einer zweiten Ausführungsform in Fig. 2 und Fig. 4 besteht im Wesentlichen aus einem ersten Filament 13 aus einem anorganischen Stoff und einem zweiten Filament 12 aus einem metallischen Stoff.

Das zweite Filament 12 bildet einen homogenen Mantel mit vorzugsweise konstanter Wandstärke um das erste Filament 13.

Das Co-Filament 10 gemäß einer dritten Ausführungsform in Fig. 5 wird durch einen vergleichsweise kleinen Kontaktbereich zwischen dem ersten Filament 13 und dem zweiten Filament 12 gebildet, sodass die einzelnen Filamente 12, 13 paarweise nebeneinander angeordnet sind.

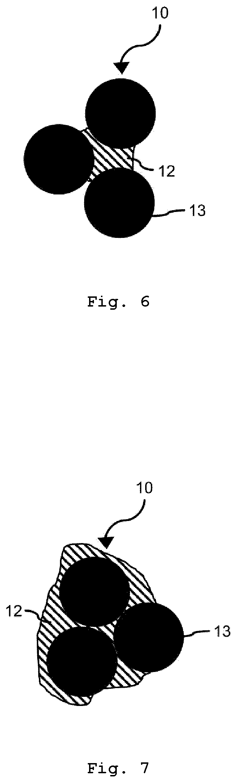

Das Co-Filament 10 gemäß einer vierten Ausführungsform in Fig. 6 weist drei erste Filamente 13 auf, welche durch ein gemeinsames zweites Filament 12 miteinander verbunden sind. Ein Co-Filament 10 gemäß der vierten Ausführungsform wird vorzugsweise durch verschmelzen des metallischen zweiten Filaments 12 dreier Co-Filamente 10 der ersten und/oder zweiten und/oder dritten Ausführungsform miteinander herbeigeführt.

Das Co-Filament 10 gemäß einer fünften Ausführungsform in Fig. 7 weist drei erste Filamente 13 auf, welche durch ein gemeinsames zweites Filament 12 miteinander verbunden sind. Es kann vorzugsweise wie ein Co-Filament 10 der vierten Ausführungsform erhalten werden.

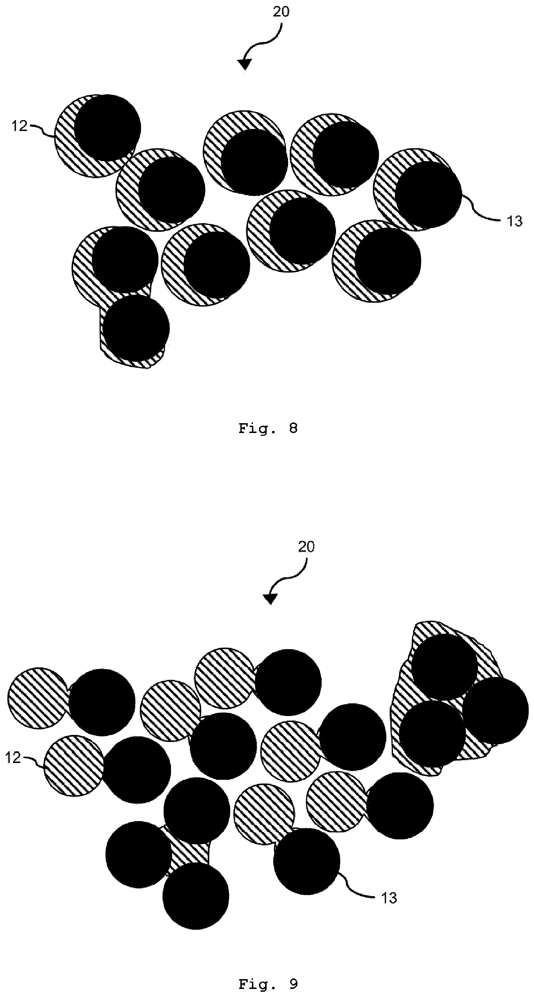

Ein Garn 20 nach einer ersten Ausführungsform in Fig. 8 oder ein Garn 20 gemäß einer zweiten Ausführungsform in Fig. 9 besteht aus einer Mehrzahl von Co-Filamenten 10 gemäß der ersten und/oder zweiten und/oder dritten und/oder vierten und/oder fünften Ausführungsform.

### Bezugszeichenliste

- 10: Co-Filament
- 12: zweites Filament
- 13: erstes Filament
- 20: Garn

## Patentansprüche

1. Co-Filament (10) aufweisend ein erstes Filament (13) und ein zweites Filament (12), wobei das erste Filament (13) und das zweite Filament (12) physikalisch und/oder chemisch miteinander zu dem Co-Filament (10) verbunden sind, wobei das erste Filament (13) aus einem anorganischen Stoff besteht, wobei das erste Filament (13) eine Glasübergangstemperatur von größer oder gleich 400 °C aufweist, wobei das erste Filament (13) ein Basaltfilament ist, wobei das zweite Filament (12) aus einem metallischen Stoff besteht, wobei das zweite Filament (12) das erste Filament (13) kontaktiert, **dadurch gekennzeichnet, dass** ein Kontaktbereich zwischen dem ersten Filament (13) und dem zweiten Filament (12) größer oder gleich 5 % des Umfangs des ersten Filaments (13) ist.

2. Co-Filament (10) nach Anspruch 1, **dadurch gekennzeichnet, dass** das erste Filament (13) eine Glasübergangstemperatur von größer oder gleich 660 °C aufweist, bevorzugt eine Glasübergangstemperatur von größer oder gleich 800 °C und besonders bevorzugt eine Glasübergangstemperatur von größer oder gleich 1.000 °C.

3. Co-Filament (10) nach einem der Ansprüche 1 oder 2, **dadurch gekennzeichnet, dass** das erste Filament (13) einen gebundenen Sauerstoffanteil von größer oder gleich 30 Massen-% aufweist, bevorzugt einen gebundenen Sauerstoffanteil von größer oder gleich 40 Massen-% und besonders bevorzugt einen gebundenen Sauerstoffanteil von größer oder gleich 44 Massen-%.

4. Co-Filament (10) nach einem der vorstehenden Ansprüche, **dadurch gekennzeichnet, dass** das erste Filament (13) einen Siliciumdioxidanteil von größer oder gleich 45 Massen-% aufweist, bevorzugt einen Siliciumdioxidanteil von größer oder gleich 50 Massen-% und besonders bevorzugt einen Siliciumdioxidanteil von größer oder gleich 55 Massen-%.

5. Co-Filament (10) nach einem der vorstehenden Ansprüche, **dadurch gekennzeichnet, dass** das erste Filament (13) einen Aluminiumoxidanteil von größer oder gleich 12 Massen-% aufweist, bevorzugt einen Aluminiumoxidanteil von größer oder gleich 14 Massen-% und besonders bevorzugt einen Aluminiumoxidanteil von größer oder gleich 16 Massen-%.

6. Co-Filament (10) nach einem der vorstehenden Ansprüche, **dadurch gekennzeichnet, dass** das erste Filament (13) einen Bortrioxidanteil von kleiner oder gleich 0,5 Massen-% aufweist, bevorzugt einen Bortrioxidanteil von kleiner oder gleich 0,1 Massen-% und besonders bevorzugt einen Bortrioxidanteil von kleiner oder gleich 0,01 Massen-%.

7. Co-Filament (10) nach einem der vorstehenden Ansprüche, **dadurch gekennzeichnet, dass** das zweite Filament (12) einen Aluminiumanteil von größer oder gleich 98 Massen-% aufweist, bevorzugt einen Aluminiumanteil von größer oder gleich 99 Massen-% und besonders bevorzugt einen Aluminiumanteil von größer oder gleich 99,5 Massen-%.

8. Co-Filament (10) nach einem der vorstehenden Ansprüche, **dadurch gekennzeichnet, dass** das erste Filament (13) eine runde oder eine eckige Querschnittsfläche aufweist.

9. Co-Filament (10) nach einem der vorstehenden Ansprüche, **dadurch gekennzeichnet, dass** das erste Filament (13) eine Quererstreckung in einem Bereich von größer oder gleich 10 µm bis kleiner oder gleich 25 µm aufweist, bevorzugt eine Quererstreckung in einem Bereich von größer oder gleich 10 µm bis kleiner oder gleich 20 µm und besonders bevorzugt eine Quererstreckung in einem Bereich von größer oder gleich 11 µm bis kleiner oder gleich 18 µm.

10. Co-Filament (10) nach einem der vorstehenden Ansprüche, **dadurch gekennzeichnet, dass** das zweite Filament (12) eine maximale Wandstärke von kleiner oder gleich 30 µm aufweist, bevorzugt eine maximale Wandstärke von kleiner oder gleich 20 µm und besonders bevorzugt eine maximale Wandstärke von kleiner oder gleich 15 µm.

11. Co-Filament (10) nach einem der vorstehenden Ansprüche, **dadurch gekennzeichnet, dass** das zweite Filament (12) eine maximale Wandstärke von größer oder gleich 0,2 µm aufweist, bevorzugt eine maximale Wandstärke von größer oder gleich 0,5 µm und besonders bevorzugt eine maximale Wandstärke von größer oder gleich 1 µm.

12. Co-Filament (10) nach einem der vorstehenden Ansprüche, **dadurch gekennzeichnet, dass** das Co-Filament (10) eine maximale Quererstreckung in einem Bereich von größer oder gleich 10 µm bis kleiner oder gleich 55 µm aufweist, bevorzugt eine maximale Quererstreckung in einem Bereich von größer oder gleich 10 µm bis kleiner oder gleich 40 µm und besonders bevorzugt eine maximale Quererstreckung in einem Bereich von größer oder gleich 11 µm bis kleiner oder gleich 35 µm.

13. Co-Filament (10) nach einem der vorstehenden Ansprüche, **dadurch gekennzeichnet, dass** der Kontaktbereich zwischen dem ersten Filament (13) und dem zweiten Filament (12) größer oder gleich 10 % des Umfangs des ersten Filaments (13) ist, bevorzugt größer oder gleich 15 % des Umfangs des ersten Filaments (13) und besonders bevorzugt größer oder gleich 20 % des Umfangs des ersten Filaments (13).

14. Co-Filament (10) nach einem der vorstehenden Ansprüche, **dadurch gekennzeichnet, dass** der Kontaktbereich zwischen dem ersten Filament (13) und dem zweiten Filament (12) kleiner oder gleich 95 % des Umfangs des ersten Filaments (13) ist, bevorzugt kleiner oder gleich 90 % des Umfangs des ersten Filaments (13) und besonders bevorzugt kleiner oder gleich 85 % des Umfangs des ersten Filaments (13).

15. Roving aufweisend ein Co-Filament (10) nach einem der Ansprüche 1 bis 14.

16. Garn aufweisend ein Co-Filament (10) nach einem der Ansprüche 1 bis 14.

17. Halbzeug aufweisend ein Co-Filament (10) nach einem der Ansprüche 1 bis 14.

18. Verwendung eines Co-Filaments (10) nach einem der Ansprüche 1 bis 14 zur Leitung von elektrischen Strömen und/oder zur Leitung von Wärme und/oder zur Abschirmung von elektromagnetischen Wellen und/oder als Bestandteil einer Antenne.

19. Verfahren zur Herstellung eines Co-Filaments (10) nach einem der Ansprüche 1 bis 14 aufweisend die nachfolgenden Schritte:
- Bilden des ersten Filaments (13) mit einem Düsenziehverfahren oder einem Spinnverfahren; und
- Zumindest teilweises Beschichten des ersten Filaments (13) mit dem zweiten Filament (12).

## Claims

1. Co-filament (10) comprising a first filament (13) and a second filament (12), the first filament (13) and the second filament (12) being physically and/or chemically connected to one another to form the co-filament (10), the first filament (13) consisting of an inorganic substance, the first filament (13) having a glass transition temperature of greater than or equal to 400°C, the first filament (13) is a basalt filament, the second filament (12) consisting of a metal material, the second filament (12) contacting the first filament (13),
**characterized in that**
a contact region between the first filament (13) and the second filament (12) is greater than or equal to 5% of the circumference of the first filament (13).

2. Co-filament (10) according to claim 1, **characterized in that** the first filament (13) has a glass transition temperature of greater than or equal to 660°C, preferably a glass transition temperature of greater than or equal to 800°C, and particularly preferably a glass transition temperature of greater than or equal to 1000°C.

3. Co-filament (10) according to either of claims 1 or 2,
**characterized in that** the first filament (13) has a bound oxygen content of greater than or equal to 30% by mass, preferably a bound oxygen content of greater than or equal to 40% by mass, and particularly preferably a bound oxygen content of greater than or equal to 44% by mass.

4. Co-filament (10) according to any of the preceding claims,
**characterized in that** the first filament (13) has a silica content of greater than or equal to 45% by mass, preferably a silica content of greater than or equal to 50% by mass, and particularly preferably a silica content of greater than or equal to 55% by mass.

5. Co-filament (10) according to any of the preceding claims,
**characterized in that** the first filament (13) has an alumina content of greater than or equal to 12% by mass, preferably an alumina content of greater than or equal to 14% by mass, and particularly preferably an alumina content of greater than or equal to 16% by mass.

6. Co-filament (10) according to any of the preceding claims,
**characterized in that** the first filament (13) has a boron trioxide content of less than or equal to 0.5% by mass, preferably a boron trioxide content of less than or equal to 0.1% by mass, and particularly preferably a boron trioxide content of less than or equal to 0.01% by mass.

7. Co-filament (10) according to any of the preceding claims,
**characterized in that** the second filament (12) has an aluminum content of greater than or equal to 98% by mass, preferably an aluminum content of greater than or equal to 99% by mass, and particularly preferably an aluminum content of greater than or equal to 99.5% by mass.

8. Co-filament (10) according to any of the preceding claims,
**characterized in that** the first filament (13) has a round or an angular cross-sectional area.

9. Co-filament (10) according to any of the preceding claims,
**characterized in that** the first filament (13) has a transverse extension in a range of greater than or equal to 10 µm to less than or equal to 25 µm, preferably a transverse extension in a range of greater than or equal to 10 µm to less than or equal to 20 µm, and particularly preferably a transverse extension in a range of greater than or equal to 11 µm to less than or equal to 18 µm.

10. Co-filament (10) according to any of the preceding claims,
**characterized in that** the second filament (12) has a maximum wall thickness of less than or equal to 30 µm, preferably a maximum wall thickness of less than or equal to 20 µm, and particularly preferably a maximum wall thickness of less than or equal to 15 µm.

11. Co-filament (10) according to any of the preceding claims,
**characterized in that** the second filament (12) has a maximum wall thickness of greater than or equal to 0.2 µm, preferably a maximum wall thickness of greater than or equal to 0.5 µm, and particularly preferably a maximum wall thickness of greater than or equal to 1 µm.

12. Co-filament (10) according to any of the preceding claims,
**characterized in that** the co-filament (10) has a maximum transverse extension in a range of greater than or equal to 10 µm to less than or equal to 55 µm, preferably a maximum transverse extension in a range of greater than or equal to 10 µm to less than or equal to 40 µm, and particularly preferably a maximum transverse extension in a range of greater than or equal to 11 µm to less than or equal to 35 µm.

13. Co-filament (10) according to any of the preceding claims,
**characterized in that** the contact region between the first filament (13) and the second filament (12) is greater than or equal to 10% of the circumference of the first filament (13), preferably greater than or equal to 15% of the circumference of the first filament (13), and particularly preferably greater than or equal to 20% of the circumference of the first filament (13).

14. Co-filament (10) according to any of the preceding claims,
**characterized in that** the contact region between the first filament (13) and the second filament (12) is less than or equal to 95% of the circumference of the first filament (13), preferably less than or equal to 90% of the circumference of the first filament (13), and particularly preferably less than or equal to 85% of the circumference of the first filament (13).

15. Roving comprising a co-filament (10) according to any of claims 1 to 14.

16. Yarn comprising a co-filament (10) according to any of claims 1 to 14.

17. Semi-finished product comprising a co-filament (10) according to any of claims 1 to 14.

18. Use of a co-filament (10) according to any of claims 1 to 14 for conducting electrical currents and/or for conducting heat and/or for shielding electromagnetic waves and/or as a component of an antenna.

19. Method for producing a co-filament (10) according to any of claims 1 to 14, comprising the following steps:
- forming the first filament (13) using a nozzle drawing method or a spinning method; and
- at least partly coating the first filament (13) with the second filament (12).

## Revendications

1. Co-filament (10) présentant un premier filament (13) et un second filament (12), dans lequel le premier filament (13) et le second filament (12) sont reliés physiquement et/ou chimiquement l'un à l'autre pour former le co-filament (10), dans lequel le premier filament (13) est constitué d'une substance inorganique, dans lequel le premier filament (13) présente une température de transition vitreuse supérieure ou égale à 400 °C, dans lequel le premier filament (13) est un filament de basalte, dans lequel le second filament (12) est constitué d'une substance métallique, dans lequel le second filament (12) est en contact avec le premier filament (13),
**caractérisé en ce que**
une zone de contact entre le premier filament (13) et le second filament (12) est supérieure ou égale à 5 % de la circonférence du premier filament (13).

2. Co-filament (10) selon la revendication 1, **caractérisé en ce que** le premier filament (13) présente une température de transition vitreuse supérieure ou égale à 660 °C, de préférence une température de transition vitreuse supérieure ou égale à 800 °C et de manière particulièrement préférée une température de transition vitreuse supérieure ou égale à 1000 °C.

3. Co-filament (10) selon l'une des revendications 1 ou 2,
**caractérisé en ce que** le premier filament (13) présente une teneur en oxygène lié supérieure ou égale à 30 % en masse, de préférence une teneur en oxygène lié supérieure ou égale à 40 % en masse et de manière particulièrement préférée une teneur en oxygène lié supérieure ou égale à 44 % en masse.

4. Co-filament (10) selon l'une des revendications précédentes,
**caractérisé en ce que** le premier filament (13) présente une teneur en dioxyde de silicium supérieure ou égale à 45 % en masse, de préférence une teneur en dioxyde de silicium supérieure ou égale à 50 % en masse et de manière particulièrement préférée une teneur en dioxyde de silicium supérieure ou égale à 55 % en masse.

5. Co-filament (10) selon l'une des revendications précédentes,
**caractérisé en ce que** le premier filament (13) présente une teneur en oxyde d'aluminium supérieure ou égale à 12 % en masse, de préférence une teneur en oxyde d'aluminium supérieure ou égale à 14 % en masse et de manière particulièrement préférée une teneur en oxyde d'aluminium supérieure ou égale à 16 % en masse.

6. Co-filament (10) selon l'une des revendications précédentes,
**caractérisé en ce que** le premier filament (13) présente une teneur en trioxyde de bore inférieure ou égale à 0,5 % en masse, de préférence une teneur en trioxyde de bore inférieure ou égale à 0,1 % en masse et de manière particulièrement préférée une teneur en trioxyde de bore inférieure ou égale à 0,01 % en masse.

7. Co-filament (10) selon l'une des revendications précédentes,
**caractérisé en ce que** le second filament (12) présente une teneur en aluminium supérieure ou égale à 98 % en masse, de préférence une teneur en aluminium supérieure ou égale à 99 % en masse et de manière particulièrement préférée une teneur en aluminium supérieure ou égale à 99,5 % en masse.

8. Co-filament (10) selon l'une des revendications précédentes,
**caractérisé en ce que** le premier filament (13) présente une surface en section transversale ronde ou angulaire.

9. Co-filament (10) selon l'une des revendications précédentes,
**caractérisé en ce que** le premier filament (13) présente un allongement transversal dans une plage allant de 10 µm ou plus à 25 µm ou moins, de préférence un allongement transversal dans une plage allant de 10 µm ou plus à 20 µm ou moins et de manière particulièrement préférée un allongement transversal dans une plage allant de 11 µm ou plus à 18 µm ou moins.

10. Co-filament (10) selon l'une des revendications précédentes,
**caractérisé en ce que** le second filament (12) présente une épaisseur de paroi maximale inférieure ou égale à 30 µm, de préférence une épaisseur de paroi maximale inférieure ou égale à 20 µm et de manière particulièrement préférée une épaisseur de paroi maximale inférieure ou égale à 15 µm.

11. Co-filament (10) selon l'une des revendications précédentes,
**caractérisé en ce que** le second filament (12) présente une épaisseur de paroi maximale supérieure ou égale à 0,2 µm, de préférence une épaisseur de paroi maximale supérieure ou égale à 0,5 µm et de manière particulièrement préférée une épaisseur de paroi maximale supérieure ou égale à 1 µm.

12. Co-filament (10) selon l'une des revendications précédentes,
**caractérisé en ce que** le co-filament (10) présente un allongement transversal maximal dans une plage allant de 10 µm ou plus à 55 µm ou moins, de préférence un allongement transversal maximal dans une plage allant de 10 µm ou plus à 40 µm ou moins et de manière particulièrement préférée un allongement transversal maximal dans une plage allant de 11 µm ou plus à 35 µm ou moins.

13. Co-filament (10) selon l'une des revendications précédentes,
**caractérisé en ce que** la zone de contact entre le premier filament (13) et le second filament (12) est supérieure ou égale à 10 % de la circonférence du premier filament (13), de préférence supérieure ou égale à 15 % de la circonférence du premier filament (13) et de manière particulièrement préférée supérieure ou égale à 20 % de la circonférence du premier filament (13).

14. Co-filament (10) selon l'une des revendications précédentes,
**caractérisé en ce que** la zone de contact entre le premier filament (13) et le second filament (12) est inférieure ou égale à 95 % de la circonférence du premier filament (13), de préférence inférieure ou égale à 90 % de la circonférence du premier filament (13) et de manière particulièrement préférée inférieure ou égale à 85 % de la circonférence du premier filament (13).

15. Stratifil présentant un co-filament (10) selon l'une des revendications 1 à 14.

16. Fil présentant un co-filament (10) selon l'une des revendications 1 à 14.

17. Produit semi-fini présentant un co-filament (10) selon l'une des revendications 1 à 14.

18. Utilisation d'un co-filament (10) selon l'une des revendications 1 à 14 pour la conduction de courants électriques et/ou pour la conduction de chaleur et/ou pour le blindage contre les ondes électromagnétiques et/ou comme composant d'une antenne.

19. Procédé de fabrication d'un co-filament (10) selon l'une des revendications 1 à 14, présentant les étapes suivantes :
- formation du premier filament (13) par un procédé d'étirage à la filière ou un procédé de filage ; et
- revêtement au moins partiel du premier filament (13) avec le second filament (12).
